# EUROPEAN PATENT SPECIFICATION

(11) **EP 0 670 018 B1**
(45) Date of publication and mention of the grant of the patent: **04.08.1999**
(21) Application number: 92901886.9
(22) Date of filing: 30.12.1991
(51) Int. Cl.: F16J 15/06, F16J 15/12, F16L 23/00

(54) **SEAL**
DICHTUNG
JOINT D'ETANCHEITE

(30) Priority: 31.12.1990 GB 90282195; 21.01.1991 GB 91013011
(43) Date of publication of application: 06.09.1995
(73) Proprietor: SPECIALIST SEALING LIMITED, St.Helier Jersey Channel Islands (GB)
(72) Inventor: NICHOLSON, Terence Peter, Hexham, Northumberland NE46 3BA (GB)
(74) Representative: Mounteney, Simon James
(86) International application number: GB9102327
(87) International publication number: WO9212365

(56) References cited:
- WO-A-89/03491
- DE-A- 2 828 475
- DE-A- 3 720 224
- DE-B- 2 220 536

## Description

This invention relates to a flexible seal comprising a flexible protective envelope having substantially parallel spaced-apart portions, and a resiliently deformable packing disposed within the envelope. The invention has particular but not exclusive application to static seals for glass-lined vessels, for example pressure vessels.

A problem which arises in the sealing of pipes and vessels, is that the flange surfaces or other sealing surfaces are often less than perfectly flat.

This problem is particularly serious in the case of glass-lined vessels, which commonly have flange surfaces out of flatness both circumferentially and radially. Distortion of the flange surfaces occurs when the glass powder that has been sprayed onto the vessel surfaces is fused, the fusing temperature being in the region of 750°C.

In a glass-lined vessel, apertures may need to be sealed over a range of sizes from 1 inch (25 millimetres) diameter to 7 feet (213 centimetres). The required seal thickness may vary from 1/16th of an inch to 1/2 inch (1.5 to 12.7 mm).

In the past, seals have commonly contained asbestos, and have been inefficient and have required considerable amounts of time for installation and replacement.

An object of the present invention is to provide a flexible seal, suitable for sealing glass-lined vessels and in other circumstances where sealing surfaces are not perfectly flat, which seal will not contain any asbestos or other harmful materials, and will provide high seal efficiency, reduced seal assembly time, and a substantial decrease in down-time of the equipment involved.

Our British Patent Application No. 9017173. 7 filed 6th August 1990 discloses seals capable of achieving these objects, for thicker seals, typically 4. 7 mm or more thick. The seal proposed in the aforesaid application comprises an envelope, and a packing within the envelope, the packing comprising a plurality of adjacent turns of strip material, arranged with the width direction of the strip extending generally perpendicular to the sealing faces of the seal, the strip material being resilient and having apertures extending through it, distributed along the strip length, whereby the strip is resilient in the direction of its width.

In a preferred embodiment, the strip material is stainless steel or other suitable metal and the envelope is PTFE.

WO 89/03491 discloses a seal including an envelope and a packing within the envelope. Once again, the packing is formed from a coiled strip structure, arranged with the width direction of the structure extending generally perpendicular to the sealing faces of the seal. In this case the structure is an assembly of three metal strips, namely two rectangular section strips made of solid drawn metal and a roll-formed strip of uniform thickness, which is thin in relation to its width and formed centrally with at least one arch-shaped convolution.

DE 28 28 475 and DE 37 20 224 each describe a seal in which a plastics or rubber envelope contains a single inner, corrugated metal layer.

A specific object of the present invention is to provide a seal capable of overcoming the shortcomings of conventional seals and achieving the above-mentioned objects, in a small seal thickness, typically 4 mm thick or less.

In this regard, the invention provides a seal including the characterising features of Claim 1.

The material of which the packing is formed must be relatively strong but resilient, in order to resist applied sealing stresses while yielding flexibly to these and maintaining sealing pressure.

In general, the packing may present peaks and troughs in order to accommodate lack of flatness in the surfaces to be sealed, with an optimum combination of strength and compensation for lack of flatness.

Optionally, a further layer may be interposed between two deformed layers. The interposed layer is preferably attached to one or both of the other layers, for example by spot welding or by adhesive bonding.

The seal may contain an inert gas, for example argon or nitrogen, in particular within the aforesaid closed cells. Filling the sealing structure with an inert gas under pressure enables the seal to cater better to unusual circumstances and difficult applications.

The packing material may present at least one peak and trough within the envelope.

These and further preferred features of the invention are set out in the dependent claims.

### BRIEF DESCRIPTION OF THE DRAWINGS

The present invention will be further described with reference to the accompanying drawings in which:
Figure 1 is a radial cross section of an individual metal packing ring.
Figure 2 shows a detail of the ring on a larger scale.
Figure 3 shows a pair of such rings placed back to back.
Figure 4 shows the pair of rings in an envelope of the slit type.
Figure 5 shows a similar pair of rings in a sealed envelope.
Figures 6 and 7 show alternative packing ring shapes,
Figure 8 shows a metal packing for full-face sealing, and
Figure 9 shows a modification of the packing shown in Figure 3.

### DESCRIPTION OF PREFERRED EMBODIMENTS

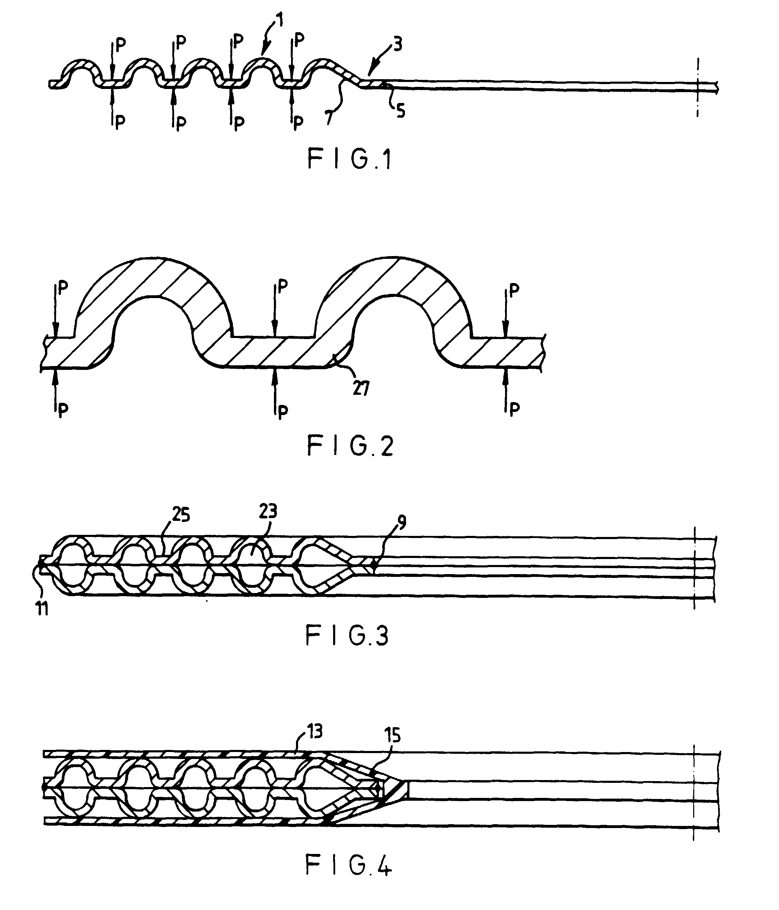

In the manufacture of seal ring packings embodying the present invention, metal rings are machined or stamped from sheet metal of predetermined thickness and quality suitable for the desired application. Annular corrugations are provided in the rings, either in the course of the machining or stamping, or by a separate stamping or embossing step. Figure 1 illustrates one form of spherical or arcuate annular corrugations 1 embossed in a sheet metal ring 3 which has a central aperture 5. The corrugations are all embossed so as to project axially on one and the same side of the initial plane of the ring. The radially innermost corrugation has a sloping transition 7 at its radially inner side, in contrast to the substantially circular arcuate profiles of the other corrugations and of the radially outer portion of the innermost corrugation.

It will be seen particularly from Figure 2 that each corrugation is substantially semi-circular in radial cross-section, joining the un-deformed planar regions 25 of the ring at relatively sharp shoulders 27.

Such a ring can be used singly as the packing within a protective envelope, e.g. of plastics material, but in order to increase the strength of the seal, it is preferred that a pair of packing rings, which are mirror images of one another in the axial direction, be placed back to back with their respective corrugations in register, as shown in Figure 3, thereby defining closed annular cells 23 between the sheet metal rings.

In order to increase the support area when the rings are placed back to back, the metal of the ring in the regions 25 between the corrugations is preferably reduced in thickness. This increases the contact surface between the two rings and substantially eliminates any possibility of one ring slipping off the other when the seal is axially compressed. The taper of the innermost corrugation region 7 is provided in order to give support to an envelope 13 of the conventional slit type, that is to say an envelope formed by slitting an annular block or sheet of PTFE or other envelope material, producing a V- or Y-configuration at the radially inner region of the envelope, as can be seen in Figure 4.

As shown in Figure 3, the two metal packing ring pressings are placed back to back and are fitted, in this manner, into a welding jig, in which they are fusion welded at 9, 11, around the inner and outer diameters of the rings, to form a unitary packing structure. If desired, the structure (that is to say the annular cells 23 formed by the corrugations) can be filled with an inert gas such as argon or nitrogen under pressure, at this stage.

The packing structure is then provided with an envelope, of PTFE or other suitable material. The envelope provides the actual seal against the flanges or other surfaces to be sealed, and also resists attack from the contents of vessels or pipelines sealed by the seal, while the packing provides mechanical strength and resilience. Figure 4 shows the cellular packing structure fitted into the conventional slit-type PTFE envelope 13. As mentioned above, the sloping inner regions 7 of the packing provide support for the V-section inner region 15 of the envelope.

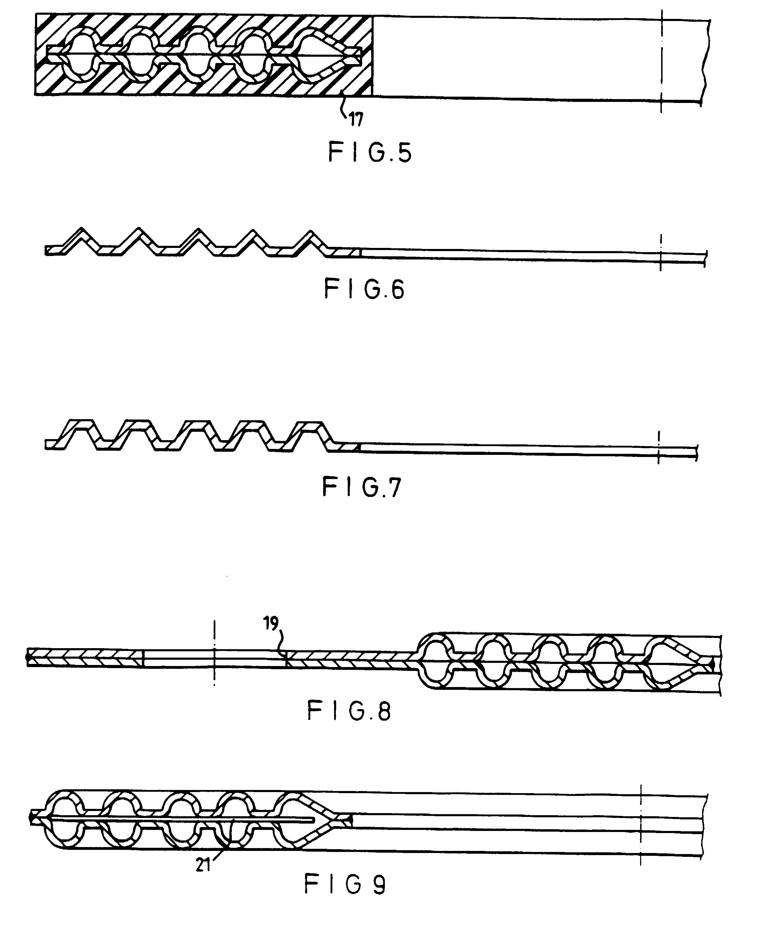

Alternatively, if a seal of greater integrity is required, the packing can be encased in PTFE by moulding or bonding, as shown in Figure 5 which illustrates the metal packing structure encapsulated in an annular block 17 of envelope material.

A further possibility is to place the packing structure within an envelope formed by machining a radial channel in an annular block of envelope material, the channel being open radially outwardly.

It is believed that corrugations or other deformations of arcuate cross-section are preferable, not least because they will lead to relatively low local stresses in the packing and to a good distribution of the sealing pressure. However, deformations of other form can be used, for example corrugations of triangular or saw-tooth cross-section as shown in Figure 6, or of trapezium cross-section as shown in Figure 7.

The illustrated embodiments have annular corrugations. However the packing may alternatively have more localised deformations, that is to say deformations which do not each extend through 360° about the axis of the seal. Thus, for example, the deformations may consist of a plurality of dimples. If a pair of dimpled packing rings is used back to back, the respective dimples of the rings may, or may not, be in register with one another; in either case the dimples will form closed cells.

The operational characteristics of the illustrated seals, in particular using the packing structure shown in Figure 3, are excellent. In effect, the packing structure of Figure 3 can be regarded as a plurality of interconnected annular tubes or hollow rings. These can adjust circumferentially and radially to substantially any likely variation in flatness of the mating faces to be sealed.

As already mentioned, the packing structure may be filled with an inert gas under pressure. This enables the seal to cater for unusual circumstances such as:
a) extreme out of flatness, where it is necessary to use an insert of the greatest thickness, e.g. 4mm, yet at the same time use metal rings of reduced thickness so that the compression loads are not abnormal. In such cases when the rings are gas filled the load can be increased but at the same time the load is cushioned;
b) for more exotic application such as the sealing cf high tech pressure seals where loads are to the absolute minimum;
c) the sealing of extremely high vacuum equipment such as electron accelerators.

In brief, the present seals can be designed to suit an extremely broad range of design criteria, i.e. to meet most design standards by simply adjusting the height and pitch of the corrugations in relation to the thickness and specification of the metal and to operational requirements.

These present seals can be supplied to fit in spigot and recess joints, inside bolt centres, or full face. For full face applications, the outside of the metal packing ring is extended to the full diameter of the flange to be sealed, and the corrugations are embossed to within a short distance of the clamping bolt holes 19. If desired the plates may be seam welded around the outside of the corrugations as well as being fusion welded around both the inner and outer diameters; see Figure 8.

For use at high temperatures, the metal plate or plates forming the packing may be coated with expanded graphite, or expanded graphite may fill the troughs of the undulations, optionally on both faces of the packing especially in the twin-plate embodiments such as those shown in figures 3 to 5, figure 8 and figure 9. The measure has been found to provide a seal which operates very successfully in extreme conditions.

Figure 9 shows a packing composed of three metal plates, namely a pair of plates with corrugations as shown in Figure 3, and an interposed third plate 21 of flat sheet metal, sandwiched between the corrugated regions of the outer plates.

This interposed additional plate can provide even greater flexibility to the seal, for unusual or stressful applications.

If the packing is to be gas-filled, as mentioned above, the interposed flat plate is preferably perforated so as to allow communication between the corrugations of the respective outer plates. It will be observed that in Figure 9 the radially innermost edge of the interposed plate 21 terminates short of the radially innermost boundary of the innermost corrugations 7.

The interposed plate can be loose (in the sense that it is not attached to the corrugated outer plate), but preferably it is located in position for example by being attached to one or both of the outer plates, for example by spot welding cr adhesive bonding.

## Claims

1. A flexible seal comprising a flexible protective envelope (13) having substantially parallel spaced-apart portions, and a resiliently deformable packing (3) disposed within the envelope (13); characterised in that the packing (3) comprises a resilient cellular structure comprising two or more superposed layers of resilient sheet material each lying generally in a plane perpendicular to the direction in which a sealing or clamping force is experienced by the seal during use and generally parallel to and between the said portions; at least one of which layers comprising at least one deformation whereby a closed cell (23) is formed between the layers.

2. A seal as claimed in claim 1, in which the envelope (13) consists of chemically resistant plastics material.

3. A seal as claimed in claim 1 or 2 wherein the or each deformation (1) is of arcuate cross-section.

4. A seal as claimed in claim 1 or 2 wherein the or each deformation is of triangular or saw-tooth cross-section.

5. A seal as claimed in claim 1 or 2 wherein the or each deformation is of trapezium cross-section.

6. A seal as claimed in any of claims 1 to 5 in which the packing comprises two superposed sheets, each of which is deformed, placed back to back with their respective deformed regions forming closed cells (23).

7. A seal as claimed in claim 6, wherein a further layer of flat sheet material (21) is interposed between the two deformed layers.

8. A seal as claimed in claim 7 in which the respective deformed regions are in register and the said further layer is perforated.

9. A seal as claimed in any of the preceding claims wherein the cell is filled with an inert gas under pressure.

10. A seal as claimed in any preceding claim wherein the packing consists of sheet metal.

11. A seal as claimed in any preceding claim wherein the seal and cell are annular.

12. A seal as claimed in any of claims 1 to 9 in which the cell is localized.

13. A seal as claimed in any of claims 1 to 12 in which the packing presents at least one peak and trough defining at least one cell.

14. A flexible seal according to claim 12 in which at least one said layer of resilient sheet material is of dimpled form.

## Patentansprüche

1. Flexible Dichtung, die eine flexible Schutzhülle (13), die im wesentlichen parallele, mit Zwischenraum angeordnete Abschnitte hat, und ein elastisch verformbares Dichtungsmittel (3) umfaßt, das innerhalb der Hülle (13) angeordnet ist; dadurch gekennzeichnet, daß das Dichtungsmittel (3) eine elastische Zellstruktur aufweist, die zwei oder mehrere sich überdeckende Lagen eines elastischen Schichtmaterials aufweist, die jeweils allgemein in einer Ebene, die senkrecht zu der Richtung verläuft, in der die Dichtung während des Einsatzes eine Dichtungs- oder Klemmkraft erfährt, und allgemein parallel zu und zwischen den Abschnitten liegen; wobei wenigstens eine der Lagen wenigstens eine Verformung aufweist, wodurch zwischen den Lagen eine geschlossene Zelle (23) gebildet wird.

2. Dichtung nach Anspruch 1, bei der die Hülle (13) aus chemisch resistentem Kunststoffmaterial besteht.

3. Dichtung nach Anspruch 1 oder 2, bei der die oder jede Verformung (1) einen bogenförmigen Querschnitt hat.

4. Dichtung nach Anspruch 1 oder 2, bei der die oder jede Verformung einen dreieckigen oder einen Sägezahnquerschnitt hat.

5. Dichtung nach Anspruch 1 oder 2, bei der die oder jede Verformung einen trapezförmigen Querschnitt hat.

6. Dichtung nach einem der Ansprüche 1 bis 5, bei der das Dichtungsmaterial aus zwei sich überdeckenden Schichten besteht, die jeweils verformt sind und die mit ihren entsprechenden verformten Bereichen stegverbunden angeordnet sind, um geschlossene Zellen (23) zu bilden.

7. Dichtung nach Anspruch 6, bei der eine weitere Lage eines flachen Schichtmaterials (21) zwischen die beiden verformten Lagen eingefügt wird.

8. Dichtung nach Anspruch 7, bei der die entsprechenden verformten Bereiche aufeinanderpassen und die weitere Lage perforiert ist.

9. Dichtung nach einem der vorhergehenden Ansprüche, bei der die Zelle mit einem inerten Gas unter Druck gefüllt ist.

10. Dichtung nach einem der vorhergehenden Ansprüche, bei der das Dichtungsmittel aus Metallblech besteht.

11. Dichtung nach einem der vorhergehenden Ansprüche, bei der die Dichtung und die Zelle ringförmig sind.

12. Dichtung nach einem der Ansprüche 1 bis 9, bei der die Zelle örtlich fixiert ist.

13. Dichtung nach einem der Ansprüche 1 bis 12, bei der das Dichtungsmittel wenigstens einen Gipfelpunkt und eine Mulde aufweist, die wenigstens eine Zelle definieren.

14. Flexible Dichtung nach Anspruch 12, bei der wenigstens eine der Lagen aus elastischem Schichtmaterial eine leicht eingedrückte Form hat.

## Revendications

1. Joint d'étanchéité flexible comprenant une gaine protectrice flexible (13) comportant des parties espacées de façon pratiquement parallèle, et une garniture à déformation élastique (3), agencée dans la gaine (13); caractérisé en ce que la garniture (3) comprend une structure cellulaire élastique comprenant deux ou plusieurs couches superposées de matériau en feuille élastique, située généralement chacune dans un plan perpendiculaire à la direction dans laquelle une force d'étanchéité ou de serrage est appliquée au joint d'étanchéité en servie, et en général parallèlement auxdites parties et entre celles-ci; au moins une desdites couches comprenant au moins une déformation, une alvéole fermée (23) étant ainsi formée entre les couches.

2. Joint d'étanchéité selon la revendication 1, dans lequel la gaine (13) est composée d'une matière plastique à résistance chimique.

3. Joint d'étanchéité selon les revendications 1 ou 2, dans lequel la ou chaque déformation (1) a une section transversale arquée.

4. Joint d'étanchéité selon les revendications 1 ou 2, dans lequel la ou chaque déformation a une section transversale triangulaire ou en dents de scie.

5. Joint d'étanchéité selon les revendications 1 ou 2, dans lequel la ou chaque déformation a une section transversale trapézoïdale.

6. Joint d'étanchéité selon l'une quelconque des revendications 1 à 5, dans lequel la garniture comprend deux feuilles superposées, chacune de celles-ci étant déformée, agencées dos contre dos, les régions déformées respectives formant des alvéoles fermées (23).

7. Joint d'étanchéité selon la revendication 6, dans lequel une couche additionnelle de matériau en feuille plat (21) est agencée entre les deux couches déformées.

8. Joint d'étanchéité selon la revendication 7, dans lequel les régions déformées respectives sont alignées, ladite couche additionnelle étant perforée.

9. Joint d'étanchéité selon l'une quelconque des revendications précédentes, dans lequel l'alvéole est remplie d'un gaz inerte sous pression.

10. Joint d'étanchéité selon l'une quelconque des revendications précédentes, dans lequel la garniture est composée de tôle.

11. Joint d'étanchéité selon l'une quelconque des revendications précédentes, dans lequel le joint d'étanchéité et l'alvéole sont annulaires.

12. Joint d'étanchéité selon l'une quelconque des revendications 1 à 9, dans lequel l'alvéole est localisée.

13. Joint d'étanchéité selon l'une quelconque des revendications 1 à 12, dans lequel la garniture présente au moins une crête et un creux définissant au moins une alvéole.

14. Joint d'étanchéité flexible selon la revendication 12, dans lequel au moins une dite couche de matériau en feuilles élastique a une forme bosselée.
